# EUROPEAN PATENT APPLICATION

(11) **EP 2 110 996 A1**
(43) Date of publication of application: **21.10.2009**
(21) Application number: 07290767.8
(22) Date of filing: 20.06.2007
(51) Int. Cl.: H04L 12/56

(54) **A device and related method for selecting a data transmission path**

(71) Applicant: Alcatel Lucent, 75008 Paris (FR)
(72) Inventor: Pauwels, Bart, 3980 Tessenderlo (BE)
(74) Representative: BiiP cvba

(57) **Abstract**

The present invention relates to a device (202; 302) for use in transmission of data packets comprising means for transmitting on at least a first logical transmission path and a second logical transmission path, the first logical transmission path providing better protection for the data packets than the second logical transmission path, The device (202; 302) further comprises means for selecting the first logical transmission path or the second logical transmission path for the transmission of the data packets based on quality of service information related to the data packets. Optionally the device (202; 302) further comprises means for selecting a third logical transmission path which uses at least part of the transmission capacity of the first and/or second logical transmission path.

## Description

### Field of the Invention

The present invention generally relates to the transmission of digital data and more in particular to the selection of a data transmission path in a digital communication network such as an Asymmetric Digital Subscriber Line (ADSL) network or a Very high-speed Digital Subscriber Line (VDSL) network.

### Background of the Invention

Digital Subscriber Line (DSL) transmission technology and standards support a variety of techniques that allow to establish multiple logical paths, further called streams, on the same physical copper pair between a Central Office (CO) and a subscriber's Customer Premises Equipment (CPE). These streams identical endpoints at both sides, but behave differently with respect to Quality of Service (QoS) characteristics, with respect to error ratio, delay and delay variation.

On Digital Subscriber Lines (DSL) using high bandwidth transmission techniques like ADSL or VDSL or variants thereof, noise can corrupt a part of digital data during transport. For some service types delivered over DSL, mainly non-streaming or non-real-time services, error correction can be achieved using classical re-transmission techniques, whereby the receiver notifies the transmitter of missing data elements, which then repeats or retransmits the missing data. Nevertheless, error correction schemes based on re-transmission require a basic level of line quality, i.e. a Bit Error Ratio (BER) that does not exceed a given threshold, in order to be efficient. Moreover, for other service types, re-transmission is difficult, or even not applicable because of delay constraints on the processing of the received data, e.g. for voice and fax communication, or for streaming audio and video. Therefore, the standards relevant for high bandwidth DSL transmission techniques prescribe the use of Forward Error Correction (FEC) techniques, in order to bring the error rate to an acceptable level under typical conditions. FEC implies that a dedicated error correction code block is appended to each transmitted data block at the physical layer. This error correction code allows restoration of a limited number of bit errors in the related data block that is corrupted by noise on the line.

FEC is a good countermeasure for correcting the effects of steady-state background electrical noise on the DSL line. However, a particular noise phenomenon known as Impulse Noise. i.e. heavy electrical disturbance on the line for short periods (due to inductive coupling with power lines, or electromagnetic radiation) may render correction of one or more consecutive corrupted data blocks on the line impossible due to the excessive amount of corrupted bits in each block. Therefore, the standards also foresee an optional additional measure called Impulse Noise Protection (INP). INP allows to divide FEC protected data blocks into N smaller parts, while parts of M consecutive blocks are interleaved with each other on the line. The effect is that each block takes M times longer to transmit over the line, but an Impulse Noise phenomenon will only affect a fraction of each block. This means that less bits of all blocks are corrupted, compared to the situation where each block is transmitted as a whole, and as a result the probability that these bits can be corrected with the FEC code per block is higher. The parameters M and N have to be chosen as a function of the expected Impulse Noise characteristics. It is clear that a higher INP depth, i.e. higher N and M values, results in less data errors, but at the same time in a longer delay for the received data.

For instance, consider data blocks A, B, C and D each consisting of 8 bits of data and a transmission line whereon each second a frame of 8 bits long is transmitted. In a non-interleaved scenario, the transmission line could transport data block A first, then data block B, then data block C and finally data block D. However if an error burst occurs during any of these data blocks, the data block can become too damaged for error correction. In an interleaved scenario, the first frame on the transmission line may contain the first two bits of data blocks A, B, C and D; the second frame may contain bits three and four of data blocks A, B, C and D; and so on for frames three and four. If in this scenario a frame is subject to an error burst, only a small number of bits in each data block are damaged which can be corrected by the error correction systems. This example shows that each data block is spread over multiple transmissions. This leads to a larger delay because the receiver has to wait for the last transmission, and thus the complete data block, before it can be processed.
However, some applications cannot cope with high delays, for instance interactive media, and therefore may prefer non-interleaved data transmission paths.

The DSL standards (e.g. the specification for Very High Speed Digital Subscriber Line transceivers International Telecommunication Union (ITU) standard specification G.993.1) describe the use of multiple logical data transmission paths (also called latency channels sometimes) that are differentiated by their data block interleaving depth, to be configured on a same DSL line, in order to adequately support services with different BER and different overall delay requirements as an optional feature. In practice, typically two channels are applied: a fast channel which has shallow or no interleaving and a slow channel which has deeper interleaving.

Another important aspect of QoS is delay variation. Delay variation is typically kept within bounds in packet networks by scheduling for delay priority, by segregating (Internet Protocol) packets or (Ethernet) frames in different queues, depending on the sensitivity of their service payload to delay or delay variation (Differential Service technique), and by subsequently giving priority to the queues with delay (variation) sensitive data when contention occurs on the associated transmission path. Still, for pure packet oriented (non ATM based) transmission, once transmission of a packet or frame has started, this process has to be completed before another waiting packet or frame with higher delay priority can be scheduled and sent. So even with strict delay priority, such delay sensitive packets of frames may incur a delay variation equal to the ratio of the maximum size of a packet or frame in the network (in bits) divided by the transmission line speed (in bits/sec). Any delay variation accumulated in the network has to be compensated by a delay variation absorption buffer at the receiving end, for all services based on a constant service clock, i.e. for most audiovisual streaming or interactive communication services. This additional buffer implies an additional constant delay, on top of the coding, transmission and decoding delays.

It can be easily understood that delay variations due to such packet or frame contention remain small inside the network, by virtue of the high speed interfaces (100 Mb/s and up) being applied there. However, this picture changes, sometimes dramatically, at the edge of the network, where a DSL line with limited bandwidth is used to carry the packets or frames. And sometimes, this bandwidth is even further reduced by application of the above mentioned techniques to establish multiple transmission channels on a same DSL line for error and overall latency sensitivity reasons. These channels each have by construction a sometimes considerably lower transmission speed than the aggregate DSL line.

In order to limit this noticeable impact of contention between smaller, delay (variation) sensitive packets or frames, and large, typically delay insensitive packets or frames on DSL latency channels with typically limited bandwidth, a technique called "pre-emption" has been standardized for Packet Transfer Mode (PTM) based DSL line transmission. This technique allows to interrupt the transmission of a long packet or frame with low delay priority, and to proceed with the transmission of a (typically shorter) packet or frame with high delay priority, which arrived in its queue after the transmission of the long packet or frame with low delay priority started. Once the transmission of the higher priority packet or frame has finished, transmission of the lower priority packet or frame resumes at the point where it was stopped before. This packet or frame pre-emption technique is a method to achieve delay variation characteristics when using PTM, comparable to ATM based switching and transmission, where the segmentation of longer data blocks in ATM cells, and the capability to multiplex ATM data streams on per cell basis, offers this advantage implicitly. Pre-emption can be applied on any "latency channel" as defined above, and creates 2 independently addressable data streams on top of the latency channel selection.

The ITU G.993.1 standard specification defines that the selection of a fast or slow channel within an Asynchronous Transfer Mode (ATM) data stream is based on Virtual Paths (VP) and/or Virtual Circuits (VC). However, VP and VC are related to a particular connection or session through the ATM network and are based on the source and destination of that connection. This poses a serious problem in an environment where the type of transported data changes frequently. A typical xDSL environment is such a fast changing environment. A customer may be surfing the web while streaming video and audio and accessing internet Protocol Television (IPTV) services simultaneously. The customer has a connection to a web server, the source of the streaming media and the IPTV services. Each of these connections has VP and VC information which requires its own choice of fast or slow data channel. Thus, an operator has to configure each possible connection in advance in each node in the xDSL network. Such configuration is labour intensive and is prone to human errors. In addition, an operator may not have a priori knowledge of the type of traffic on a particular connection which makes it more difficult to select between a fast or slow data channel in a node based on the VP and VC information. Alternatively, in a PTM based network an operator can use VLAN tags or source and destination addresses such as Media Access Control (MAC) addresses or Internet Protocol (IP) addresses as described in the European Patent Application EP 1328091 entitled "Modem system and aggregator for paths with different transmission profiles" for the selection of the transmission path but these alternatives suffer from the same disadvantages as the use of VPNC.

It is an object of the present invention to provide a device and method for transmitting data packets with a latency channel, pre-emption level or other transmission path selection,which requires less human effort for configuration. It is another object of the present invention to provide such a device and method with a transmission path selection that can easily be integrated into existing networks.

### Summary of the Invention

The objectives of the present invention are realised and the drawbacks of the prior art solutions are overcome by a device for use in transmission of data packets comprising means for transmitting on at least a first logical transmission path and a second logical transmission path, the first logical transmission path providing better protection for the data packets than the second logical transmission path, characterized in that the device further comprises means for selecting the first logical transmission path or the second logical transmission path for transmission of the data packets based on quality of service information related to the data packets.

Indeed, by selecting the first logical transmission path or second logical transmission path based on quality of service information related to the data packets, the effort in configuring a network can greatly be reduced and the use of multiple transmission paths can be added to existing networks with little effort. The quality of service information related to a data packet is indicative for the desired quality of service needs for that particular data packet. Such information is generally limited to a number of possible values. For instance, in some networks each packet is assigned a priority number and packets with a higher priority will be transported first through the network. Other networks use a fixed number of bits in each packet to indicate quality of service information. Alternatively, the packets contain a description of the type of information transported therein which can be used by the device to determine the quality of service needs for that particular data packet. Any of these examples have a limited number of possible values for the quality of service information. The number of possible values is generally much smaller than all possible source and destination combinations or even just all possible source or destination addresses. As such, the operator only has to configure a limited number of possible quality of service information and related data transmission path combinations. For instance, the operator can place all streaming audio or video packets on the first logical transmission path and all file transfers on the second logical transmission path. This results in three configuration elements which can deal with a lot of network traffic without specifying each possible connection and its related data transmission path. In addition, existing networks that are able to handle traffic with different quality of service needs are already able to interpret quality of service information in data packets. For instance, an xDSL operator who has a network that is fully aware of quality of service does not have to change his network, only extend the edge equipment such as Digital Subscriber Line Access Multiplexer (DSLAM) with the functionality of selecting the most suited DSL transmission path for a particular QoS codepoint in a data packet.

The logical transmission paths can either be subdivisions of a single physical medium or link or multiple separate links with the same start- and end-point. A single physical medium such as a copper wire, an optical fibre or the wireless access can be divided in time, frequency, wavelength, etc. For instance, a copper wire can be divided into multiple transmission paths, each having their own frequency range or an optical fibre can be divided in multiple transmission paths each having their own wavelength or set of wavelengths. Alternatively, each transmission path can be a separate physical link where one link is less prone to errors than the other. For instance, the first logical transmission path could be an optical fibre which is less prone to induced noise and the second logical transmission path could be a copper wire. Although two logical transmission paths are mentioned, there may be more than two logical transmission paths. Essentially, these transmission paths differ from each other in protection offered to, and delay imposed on the information transported thereon.

Optionally, the device according to the present invention may transmit on a first logical transmission path that is an interleaved data channel.

Interleaved data channels can provide strong protection for the data in combination with error correction schemes applied to the transported data. Interleaving ensures that possible errors during transport are spread over various data packets and as such that error correction schemes can still be used when all the data is received, even if it contains errors. However, interleaving can be more or less effective depending on the interleaving depth. The interleaving depth specifies the distance between two fragments of the same data unit. For instance, an interleaving depth of four would result in the transmission of a first fragment from the first data unit, the second data unit, the third data unit and the fourth data unit, then the second fragment of the first data unit, and so on. In other words, it is a measure for the delay between two fragments of the same data unit.
Optionally, the device according to the present invention may transmit on a second logical transmission path that is a not-interleaved data channel.

Non-interleaved data channels generally provide less protection for the information transported thereon. However, because all the pieces of data for a particular destination are transmitted after each other, the receiver will have the complete data faster than when an interleaved channel is used and thus the delay is lower. Using a non-interleaved data channel enables the device to transmit data packets which cannot deal with large delays at a faster rate or with less delay. This can be beneficial for services where any large delay is noticeable for the user. For instance, during a Voice over IP (VoIP) session, a user will hear a delay between asking a question and receiving the answer or delays during sentences or words from the other user. This has a negative effect on the experience and should thus be avoided. Another example is streaming video where large delays can lead to freezing images which are undesirable.

Optionally, the device according to the present invention may transmit on a second logical transmission path that has a smaller interleaving depth than the first logical transmission path.

A second logical transmission path with a smaller interleaving depth than the first logical transmission path offers a similar advantage to the above described non-interleaved data channel. It can transport information faster than an interleaved channel with greater interleaving depth or deliver the information with less delay than an interleaved channel with greater interleaving depth. However, because the second logical transmission path is still interleaved, it offers better protection than a non-interleaved data channel. This results in a first logical transmission path which is well protected but has a higher delay and a second logical transmission path which is still protected but with a lower delay. As such, it provides a reliable transport to all data and allows the selection of high or low delays.

Optionally, the device according to the present invention may further comprise means for transmitting on a third logical transmission path that uses pre-emption, i.e. which uses at least partially the transmission resources of the first logical transmission path and/or the second logical transmission path and the means for selecting said first logical transmission path or said second logical transmission path for transmission of said data packets are adapted to select the third logical transmission path based on quality of service or type of service information related to said data packets.

The third logical transmission path may temporarily take up some or all of the transmission resources from the first and/or second logical transmission path to transmit data. This technique is also known as pre-empting. The third logical transmission path uses some of the time frames or bandwidth of the first and/second logical transmission path to transport its data. Pre-empting is another technique which may be used to provide a low delay transmission path for particular information transported thereon. The temporary interruption on one of the logical transmission paths allows the sharing of a physical medium and/or protocol while respecting quality requirements such as acceptable delay, delay variation or priority. Pre-empting and interleaving may be combined to define other logical transmission paths, selectable through the QoS qualifiers associated with data packets or frames. For instance, a transmitter may support an interleaved data channel, a non-interleaved data channel and be able to interrupt the non-interleaved data channel temporarily. This way, the transmitter has access to a slow but reliable data channel, a faster data channel and the possibility of a second fast data channel.

It is apparent to those skilled in the art that the device according to the present invention may also be used to make a selection between more than three logical transmission paths. In the particular case of xDSL technology, the device may have a choice of 4 to 8 logical transmission paths. Some DSL standard specifications provide up to 4 logical transmission paths with different protection for the traffic transported thereon and the possibility to apply pre-empting on each of these logical transmission paths resulting in a total of 8 different logical transmission paths to select from.

Optionally, the quality of service information enabling selection of the transmission path may comprise one or more of the following:
- Information indicative for an acceptable delay of the data packets;
- Information indicative for an acceptable error rate in the data packets;
- Information indicative for a priority of the data packets; and
- tags according to the IEEE 802.1P standard.

These various types of quality of service indication each provide valuable information in relation to the needs of data packets. For instance, the acceptable delay indicates how fast a data packet has to be delivered to the destination. This is important for interactive audio or video, wherein large delays are noticeable to the user. For instance, if the device is connected to both a "fast" latency channel in the sense of the xDSL standards, which offers lower protection, and a slower but well protected interleaved channel, the device can select the DSL line transmission path based on the acceptable delay for each packet and place packets with a delay requirement below the delay caused by the protection on this "fast" channel.

Streaming cannot cope well with errors, but interactive voice or gaming cannot cope well with delays. In such case, the device can place all data packets that require a low error rate on the first logical transmission path, and all other data packets on the second logical transmission path.

The QoS indication of packets is generally used to queue packets in multiple separate queues. This is normally applied to ensure that packets either are transmitted according to a pre-determined priority level scheduling discipline, e.g. work conserving with Strict Priority (SP), or Weighted Round Robin (WRR), on a same transmission resource. In a typical case of priorities for data packets, there are a fixed number of priority values. According to the present invention, the QoS indication is also used to transmit packets on the most appropriate transmission path, e.g. the device may select the fastest DSL line transmission path for a few of the highest delay priorities and use the slowest of the two DSL line transmission paths for all other priorities. Alternatively, it may select a DSL Line based on its error sensitivity or delay jitter or it may even consider delay priority, delay jitter and error sensitivity simultaneously. If there are more than two DSL line transmission paths, the device can be adapted to make more subdivisions in the priority values and assign them to different DSL line transmission paths, for instance based on the delay caused by each transmission path.

IEEE 802.1 p tags offer eight different traffic classes which can be defined for each data packet. This allows an operator to configure a DSL line transmission path for each of these traffic classes. Each data packet then can be marked for a particular traffic class by the type of source or application wherefrom the data packet originates. The device can then select the DSL line transmission path related to the traffic class and transmit the data packet accordingly.

Alternatives to these quality of service indications are for instance the Type of Service field of the Internet Protocol (IP) or the Class of Service bits in an Ethernet frame when using IEEE 802.1Q

Optionally, the device according to the present invention may be incorporated in a Digital Subscriber Line Access Multiplexer (DSLAM).

A DSLAM can be located in a central office near the xDSL network operator or closer to a group of customers of an xDSL network operator. As such, a DSLAM forms the border between the operator network and the users. By incorporating an embodiment of the present invention in a DSLAM, the operator can match directly the multiple QoS types applied inside the network, to the multiple DSL line transmission paths to/from the subscriber. This way, the traffic flowing through the operator network will be placed on appropriate DSL line transmission paths to meet seamlessly the quality of service requirements for all the traffic flowing through the network, up to the subscriber CPE. As such, the traffic flow between an operator an all users can be optimised for quality which leads to a better service for the users.

Optionally, the device according to the present invention may be incorporated in Customer Premises Equipment.

The Customer Premises Equipment (CPE) provides a connection to an xDSL network for all the devices located at the customer's premises. The CPE can for instance be a set-top box, an xDSL modem or router, etc. If the CPE supports multiple transmission paths with an embodiment of the present invention, all traffic originating from a customer can be placed on the appropriate transmission path. As such, a user can transmit his information to other users or networks over the best transmission paths for the type of traffic.

The objectives of the present invention are further also achieved by a method for transmitting data packets over at least a first logical transmission path and a second logical transmission path, the first logical transmission path providing better protection for the data packets than the second logical transmission path, characterized in that selecting the first logical transmission path or the second logical transmission path for the transmission of data packets is based on quality of service information related to the data packets.

### Brief Description of the Drawings

Fig. 1 illustrates a network with of a DSLAM 102 wherein an embodiment of the device according to the present invention is integrated; and
Fig. 2 illustrates an xDSL transmitter 200 adapted with an embodiment of the device according to the present invention to select a data transmission path.
Fig. 3 illustrates an alternate xDSL transmitter 300 adapted with an embodiment of the device according to the present invention supporting a pre-empting transmission path.

### Detailed Description of Embodiment(s)

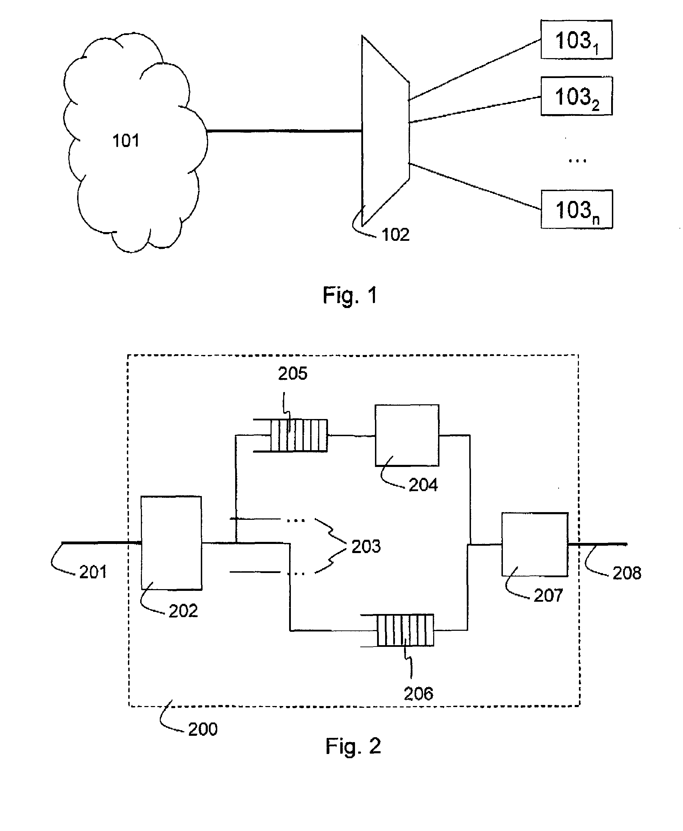

Fig. 1 illustrates a network overview with an operator network 101, a Digital Subscriber Line Access Multiplexer (DSLAM) 102 and a number of Customer Premises Equipment (CPE) 103₁ to 103ₙ. The DSLAM 102 is connected to the operator network 101 which in turn can be connected to other operator networks and the Internet. In this particular example, the operator network 101 is configured to transport data packets with regards to the quality of service information in the packets. The DSLAM 102 is further connected to the CPEs 103₁ to 103ₙ by Asymmetric Digital Subscriber Line (ADSL) lines. A CPE can be an ADSL modem, an ADSL router or a set-top box. In an alternative embodiment, the DSLAM can be connected to the CPE by Very High-speed Digital Subscriber Line (VDSL) lines or Symmetric Digital Subscriber Line (SDSL) lines.

DSLAM 102 multiplexes data packets from various sources onto the ADSL line connecting the DSLAM 102 to a particular CPE 103₁ to 103ₙ. The DSLAM 102 is in this case equipped with an embodiment of a device according to the present invention to support multiple QoS differentiated transmission paths on the link between the DSLAM 102 and the CPE, 103₁ to 103ₙ. The DSLAM 102 is therefore able to transmit data packets over e.g. an interleaved channel and a non-interleaved channel to the CPE 103₁ to 103ₙ. As such, an operator can offer services which require a low latency connection and services which require a reliable connection simultaneously.

Fig. 2 shows an xDSL transmitter 200 wherein a device 202 according to the present invention is incorporated. Such xDSL transmitter may form part of every DSL modem in DSLAM 102. The xDSL transmitter 200 receives data packets from input 201 which can be a network interface such as an RJ-45 socket or from another hardware module present in a DSLAM or CPE wherein the xDSL transmitter 200 is incorporated. The xDSL transmitter 200 in this particular example is built to transmit on e.g. two channels, an interleaved channel which offers more protection at higher delay and a non-interleaved channel which offers a lower delay but at a lower level of protection for the transported data. The xDSL transmitter 200 therefore has a selector 202 which receives data packets from the input 201. The selector 202 can retrieve quality of service related information that is contained in the data packets received from input 201, for instance IEEE 802.1 p tags, DSCP bits, Type of Service (ToS) bits or Class of Service (CoS) bits. The selector 202 can then determine the appropriate DSL line transmission path for a data packet. For instance, the selector 202 can use a 3 bit priority field in the data packet headers. The storage can then indicate that the highest 3 priorities should be transported on e.g. the faster, non-interleaved data channel and the lowest 5 priorities should be transported on the slower interleaved data channel. In an alternative embodiment where there are 4 data transmission paths, each with a different interleaving depth, the selector may put the highest two priorities on the fastest DSL line transmission path, the next two priorities on the second transmission path and so forth, with the lowest two priorities on the slowest but best protected data transmission path. Alternatively, the selector 202 can detect the type of contents of the data packets, for instance that a data packet contains e-mail traffic, streaming audio or video, Voice over IP information, etc. The selector 202 can then determine the quality of service requirements related to that type of traffic and/or the DSL line transmission path preferred for such type of data traffic. If the data packet has to go on e.g. the interleaved data transmission path, the selector 202 delivers the data packet to buffer 205 where the data packet is queued until it is retrieved by interleaver 204. The interleaver 204 divides the data packet in blocks which are then interleaved. If the data packet requires fast transmission it can immediately be placed in output buffer 206. Both output buffers 205 and 206 are connected to line driver 207. Line driver 207 is able to select data packets from both output buffers and place them on the two transmission paths supported by the physical medium 208. The physical medium is typically a copper twisted pair wire, although it will be obvious to the skilled person that applicability of the invention is not restricted to any particular physical medium or physical layer protocol.

In an alternative embodiment, the xDSL transmitter 200 may support more than two DSL line transmission paths which is not drawn in the figures but is indicated by lines 203. In such case, there may e.g. be more interleavers, or a single interleaver which can interleave data packets at various depths and place them in their respective output buffers. An interleaver which supports multiple interleaving depths may also be used to place data packets for the non-interleaved transmission path in their output buffer by not interleaving them and rather delivering them to the buffer immediately.

It should be noted that the xDSL transmitter 200 may also support multiple physical mediums connecting it to the same subscriber, for instance two copper wires, one for each transmission path. In such case, each of the output buffers may be connected to a separate line driver. In an alternative embodiment of transmitter 200, the storage 203 may be integrated into selector 202, or selector 202 may be able to retrieve configuration parameters from a central management platform in the network.

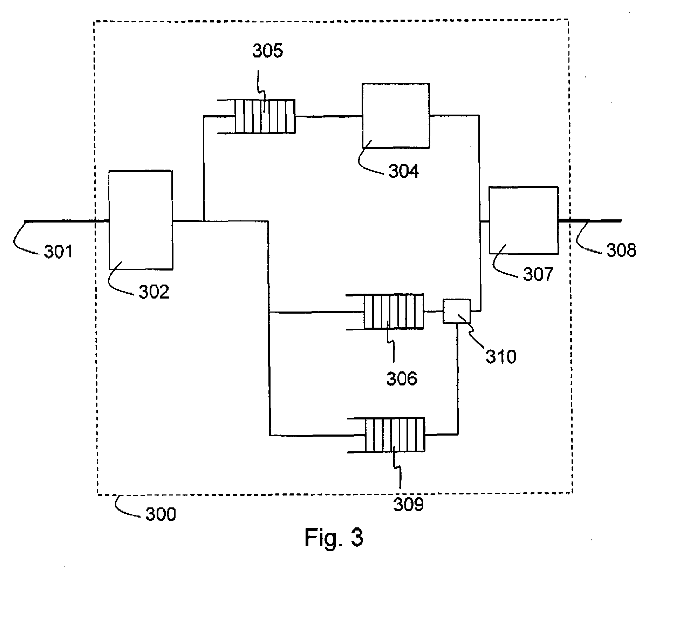

Fig. 3 illustrates an alternative embodiment of an xDSL transmitter 300 with a device 302 according to the present invention integrated therein. In this particular embodiment, the device 302 receives data over interface 301 and can select an interleaved transmission path by sending data to buffer 305 from which it is retrieved by interleaver 304 , a non-interleaved transmission path by sending data to output buffer 306, or a pre-empting transmission path by sending the data to output buffer 309. The line driver 307 selects data from the output buffer 305 or combination module 310 and places the data on the transmission medium 308. The combination module 310 provides the line driver 307 with data based on the requirement of pre-emption. If there is no need for pre-emption, the combination module 310 delivers data from output buffer 306 to the line driver 307. If pre-emption is needed, the combination module 310 either delivers all the data from output buffer 309 to the line driver 307 or a combination of data from output buffer 306 and output buffer 309. In this case, data from output buffer 309 are prioritized over other data. It should be noted that in an alternative embodiment, there may be pre-emption on the interleaved transmission path or there may be pre-emption on both interleaved and non-interleaved transmission paths. There may also be several interleaved transmission paths, each optionally supporting pre-emption.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective Claims concerned.

## Claims

1. A device (202; 302) for use in transmission of data packets, said device (202; 302) comprising means for transmitting on at least a first logical transmission path and a second logical transmission path, said first logical transmission path providing better protection for said data packets than said second logical transmission path,
**characterized in that** said device (202; 302) further comprises means for selecting said first logical transmission path or said second logical transmission path for transmission of said data packets based on quality of service or type of service information related to said data packets.

2. The device (202; 302) according to claim 1,
**characterized in that** said first logical transmission path is an interleaved data channel.

3. The device (202; 302) according to claim 1,
**characterized in that** said second logical transmission path is a not-interleaved data channel.

4. The device (202; 302) according to claim 1,
**characterized in that** said second logical transmission path is a data channel with a smaller interleaving depth than said first logical transmission path.

5. The device (202; 302) according to claim 1,
**characterized in that** said device (202; 302) further comprises means for transmitting on a third logical transmission path which uses at least partially the transmission resources of said first logical transmission path and/or said second logical transmission path and said device is further **characterized in that** said means for selecting said first logical transmission path or said second logical transmission path for transmission of said data packets are adapted to select said third logical transmission path based on quality of service or type of service information related to said data packets.

6. The device (202; 302) according to claim 1,
**characterized in that** said quality of service information comprises one or more of the following:
- information indicative for an acceptable delay of said data packets;
- information indicative for an acceptable error rate in said data packets;
- information indicative for a priority of said data packets; and
- tags according to the IEEE 802.1P standard.

7. The device (202; 302) according to claim 1,
**characterized in that** said device (202; 302) is incorporated in a Digital Subscriber Line Access Multiplexer (102).

8. The device according to claim 1,
**characterized in that** said device (202; 302) is incorporated in Customer Premises Equipment(103₁, 103₂, 103ₙ).

9. A method for choosing between at least a first logical transmission path and a second logical transmission path for transmitting data packets, said first logical transmission path providing better protection for said data packets than said second logical transmission path,
**characterized in that** selecting said first logical transmission path or said second logical transmission path for the transmission of data packets is based on quality of service information related to said data packets.
